# EUROPEAN PATENT APPLICATION

(11) **EP 4 736 713 A1**
(43) Date of publication of application: **06.05.2026**
(21) Application number: 25172773.1
(22) Date of filing: 27.04.2025
(51) Int. Cl.: A47J 37/06

(54) **A DUAL-BASKET AIR FRYER WITH TOP AND BOTTOM BACK-BLOWING**

(30) Priority: 05.11.2024 CN 202422694027 U; 05.11.2024 CN 202422697623 U; 05.11.2024 CN 202422699524 U
(71) Applicant: Zhejiang Biyi Electric Appliance Co., Ltd., Yuyao, Zhejiang 315400 (CN)
(72) Inventor: Lou, Hongxian, Yuyao, 315400 (CN); Zang, Hao, Yuyao, 315400 (CN); Zhou, Licong, Yuyao, 315400 (CN); Fu, Zhi, Yuyao, 315400 (CN)
(74) Representative: ZHAOffice SPRL

(57) **Abstract**

The present invention relates to a dual-basket air fryer that features top and bottom back-blowing, which aims at addressing a drastic temperature disparity between the upper and lower chambers of these products and similar models poses challenges in simultaneously processing and cooking food that requires high temperatures. An essential aspect of the structural design is the increased height of the thermal barrier at the top of both chambers, which transitions from the front opening to the rear section, just like a curved surface. Additionally, the thermal barrier above the basket openings in both chambers is designed with a cap edge that extends over the openings. The thermal barrier surrounding the air blades is integrated with the top thermal barrier, forming a cohesive thermal barrier corresponding to the openings on one side of the appliance. Notably, the cap edge at the lower basket opening is positioned away from the top thermal barrier, resulting in a curved gap between the back of the top thermal barrier and the lower basket opening. The upper section of the lined metal thermal barrier located at the rear of the specified gap is equipped with air outlet openings, while the lower section of the lined metal thermal barrier at the back of the same gap features air inlet openings. The air inlet holes align with honeycomb openings at the front end of the back of the basket body.

## Description

### FIELD OF TECHNOLOGY

The present invention relates to an air fryer, specifically a dual-basket air fryer that features top and bottom back-blowing.

### BACKGROUND OF THE INVENTION

Air fryer is a new household appliance for food frying by using high-speed air circulation, the food cooked by air fryer can reduce 80% of the oil and fat compared to traditional electric fryer. Air fryer is also easy to clean and its safety feature and affordable cost are highly favored. To enhance the efficiency of air fryers, certain models are designed with dual baskets positioned both above and below, or on the left and right sides. For instance, the Chinese patent application No. 202222461172.1, published on March 3, 2023, describes a present invention titled "A double-chamber air fryer without blades". Additionally, other double-layer air fryers feature a heating tube and air blades located at the top of the upper layer, along with another heating tube and air blade situated at the rear of the lower layer, as detailed in Chinese patent Application No. 202322669357.6, with an authorized publication date of April 26, 2024, titled "A double-layer air fryer". Furthermore, some models incorporate a wind blade at the rear of the upper layer and a heating tube with an additional wind blade at the rear of the lower layer, as indicated in Chinese patent Application No. 202210285610.5, published on June 17, 2022, titled "A double-layer structure of air fryer." Moreover, there are double-layer air fryers that include a wind blade at the rear of both the upper and lower layers, along with a heating tube located in the base, as described in Application No. 202411085930.1, published on August 8, 2024, titled "An air fryer." However, a drastic temperature disparity between the upper and lower chambers of these products and similar models poses challenges in simultaneously processing and cooking food that requires high temperatures.

### SUMMARY OF THE INVENTION

To address the aforementioned deficiencies, the present invention aims to release a dual-basket air fryer featuring both top and bottom back-blowing to the market. This innovation addresses the technical challenge associated with drastic temperature discrepancies between the upper and lower chambers of conventional dual-basket air fryers. Such discrepancies complicate the simultaneous processing and cooking of food that demands high temperatures, ultimately leading to unsatisfactory cooking and processing outcomes. The object is accomplished through the implementation of the following technical solution.

A dual-basket air fryer designed with top and bottom back-blowing features a dual-layer structure, comprising upper and lower chambers. The rear section of the appliance is equipped with air blades, while the upper and lower chambers are fitted with heating tubes. Each chamber includes openings for placing basket on one side. An essential aspect of the structural design is the increased height of the thermal barrier at the top of both chambers, which transitions from the front opening to the rear section, just like a curved surface. Additionally, the thermal barrier above the basket openings in both chambers is designed with a cap edge that extends over the openings. The thermal barrier surrounding the air blades is integrated with the top thermal barrier, forming a cohesive thermal barrier corresponding to the openings on one side of the appliance. Notably, the cap edge at the lower basket opening is positioned away from the top thermal barrier, resulting in a curved gap between the back of the top thermal barrier and the lower basket opening. The upper section of the lined metal thermal barrier located at the rear of the specified gap is equipped with air outlet openings, while the lower section of the lined metal thermal barrier at the back of the same gap features air inlet openings. The air inlet holes align with honeycomb openings at the front end of the back of the basket body. The body is equipped with air inlet and outlet holes. Thereby, the upper and lower baskets employ a back-blowing technique, in which air is drawn from the center of the centrifugal air blades. This air is then directed towards the heating tube through a thermal barrier. The heated air is channeled downward along this thermal barrier to the handle area of the body. From there, it is expelled from the handle end towards the front of the body, passing through the honeycomb openings at the front before ultimately being recirculated back to the center of the centrifugal air blades.

The basket body features a front end that exhibits symmetrical distribution on the opposite side of the inner wall, characterized by evenly spaced raised guide bars. The said guide bars are either formed through integrated stamping with the basket body or are positioned within a guide bar that is affixed to the inner wall of the basket body. This design enhances the circulation of hot air within the basket body.

The said blades consist of plastic centrifugal wind blades and metal centrifugal wind blades. These blades are simultaneously positioned within the upper and lower airflow guide cover located at the rear of the upper and lower chambers. The motor shafts situated at the back of the upper and lower airflow guide cover are connected to the plastic and metal centrifugal wind blades in the respective upper and lower chambers. Additionally, the peripheral surfaces of the upper and lower airflow guide cover associated with the plastic centrifugal wind blade feature perforated holes, while the wind cover linked to the metal centrifugal wind blade is connected to the inner chamber of the plastic centrifugal wind blade via back thru-holes. Furthermore, the airflow guide of the metal centrifugal blade is linked to the inner chamber of the airflow guide of the plastic centrifugal blade through a back thru-hole. This dual-blade configuration enhances the internal circulation of hot air and improves the overall heat dissipation efficiency of the system.

The upper and lower airflow guide cover associated with the plastic centrifugal blade is constructed from plastic, while the upper and lower airflow guide cover for the metal centrifugal blade is made from metal materials.

The upper and lower chambers are separated by a partition located in the rear section of the upper chamber, which houses a power board assembly and an external power cord. This assembly is positioned above the top corner of the body, along with PCB control components, motors, and heat pipes, all of which are connected to the power board assembly via wiring. This description outlines a particular structural configuration of the external power cord and is not restricted to the arrangement of the upper chamber situated in the center of the back.

The outer edge of the upper handle is aligned vertically or diagonally with the outer edge of the lower handle situated below it.

The upper and lower chambers are equipped with NTC temperature sensors located on the reverse side of the top layer of thermal barrier at the heating tube. These sensors are connected to the power board assembly within the body via respective wiring. The cold air system of the air fryer comprises a body, a plastic partition, a base, a metal liner, and a frying basket liner. The metal liner serves as the thermal barrier, while the base is positioned within the stand of the bottom of the body. The outer diameters of the metal liner in the upper and lower chambers form a primary cold air cavity between the inner diameters of the metal liner and the body, as well as the base. This primary cold air cavity is further divided into upper and lower main cold air chambers by the plastic partition. Additionally, the outer diameters of the frying basket liner in both chambers are connected to the power board assembly within the body through wiring. The spaces between the outer diameter of the basket liner and the inner diameter of the basket cover form the upper and lower subsidiary air cooling cavities. The upper and lower edges of the basket cover feature thru-holes that connect to the base of the body below the openings, while the openings in the body are situated above the metal liner at the upper edge of the holes. Air outlets are positioned on the body at the top and bottom of the plastic divider, and notches are present on both sides of the edges of the plastic divider openings on the body.

The base is designed with evenly spaced openings located at the bottom or on both sides, which serve as air inlets. These air inlets are not restricted to the bottom of the base. They may also be positioned on the rear of the body and other sections.

There exists a recessed groove at the top front end of the said body and above the opening side, and a beveled edge is incorporated into the metal liner of the body beneath this groove. A control box is situated within the groove. This configuration enhances air circulation and promotes effective heat dissipation at the upper front of the body.

The control box is positioned at the upper front end, situated above the opening side of the body. This control box contains PCB control components and is connected to the housing bracket via a hinged mechanism, specifically through the control box bracket. The hinge connection is equipped with suspension hinge. The said suspension hinge comprises nuts, screws, and various anti-slip spacers, including the first anti-slip spacer A, anti-slip spacer B, anti-slip spacer C, and the second anti-slip spacer A. The screws are symmetrically arranged on both the control box bracket and the hinge connection of the housing bracket. The lugs at each end of the hinge joint between the control box bracket and the housing bracket facilitate the connection of the screws to the nuts through these brackets. Additionally, anti-slip spacer C is positioned between the control box bracket and the housing bracket at one end of the connection, along with the first anti-slip spacer A, anti-slip spacer B, and the second anti-slip spacer A. Furthermore, at least two or more anti-slip spacers B are placed between the first and second anti-slip spacers A. Damping hinge products now available on the market are primarily designed for use in the upper and lower longitudinal settings of cabinet doors, enabling them to open or close. However, their application in household appliances requiring access to the control box from the top is limited due to inadequate load-bearing capacity, which compromises the stability of the suspension mechanism.

The said control box can be freely suspended within a range of 0 to 60 degrees via the suspension hinge.

The design of this present invention features a simple and logical structure, resulting in enhanced guided heating efficiency. It allows for rapid cooking and processing of food, particularly advantageous for simultaneously managing the temperature requirements of the upper and lower chambers for high-temperature food preparation. This model is well-suited for use as a dual-basket air fryer with top and bottom back-blowing capabilities, as well as for the structural modification of comparable products.

### ACCOMPANYING DRAWINGS

FIG. 1 is a schematic diagram of the sectional structure of an embodiment of The present invention.
FIG. 2 is a three-dimensional structural schematic diagram of the upper pot body taken out state of FIG. 1.
FIG. 3 is a schematic diagram of a part of the internal structure of the lower chamber of FIG. 2.
FIG. 4 is a schematic diagram of the partial section structure of FIG. 3, with the arrow in the diagram showing the direction of the hot air inside the lower pot body.
FIG. 5 is a schematic structural diagram of the working principle of the cold air system of FIG. 1, and the arrow in the diagram indicates the direction of heat dissipation of the cold air circulation.
FIG. 6 is a schematic diagram of the internal structure of the three-dimensional structure of FIG. 5 after the rear part of the body part is dissected.
FIG. 7 is a schematic diagram of the sectional view structure of the suspension hinge portion at the control box of FIG. 6, with the A part of the diagram being framed.
FIG. 8 is an enlarged view of part A of FIG. 7.
FIG. 9 is a schematic structural diagram of the control box open state section of FIG. 1, in which the B part is framed and the dotted line shows the control box open state.
FIG. 10 is an enlarged view of the B part of FIG. 9.
Serial numbers and names of the accompanying drawings: 1, PCB control assembly, 2, upper metal thermal barrier, 3, upper heating tube, 4, upper handle, 5, upper basket body, 6, upper grill, 7, lower metal thermal barrier, 8, lower heating tube, 9, lower handle, 10, lower basket body, 11, lower grill, 12, lower metal centrifugal air blade, 13, lower plastic centrifugal air blade, 14, lower motor, 15, power board assembly, 16, upper motor, 17, upper metal centrifugal air blade, 18, upper hardware centrifugal air blade, 19, base, 20, control box, 21, plastic partition, 22, NTC temperature sensor, 23, upper metal liner, 24, upper frying basket liner, 25, lower frying basket liner, 26, lower metal liner, 27, lower air outlet, 28, lower airflow guide cover, 29, upper airflow guide cover, 30, upper air outlet, 31, notch, 32, control box bracket, 33, nut, 34, first anti-slip spacer a, 35, anti-slip spacer b, 36, housing bracket, 37, screws, 38, anti-slip spacer C, 39, second anti-slip spacer A, 40, suspension hinge.

### EMBODIMENTS

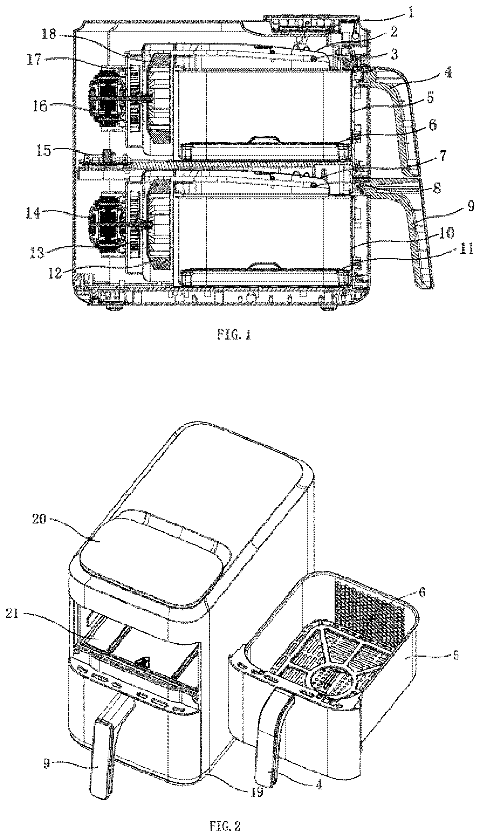

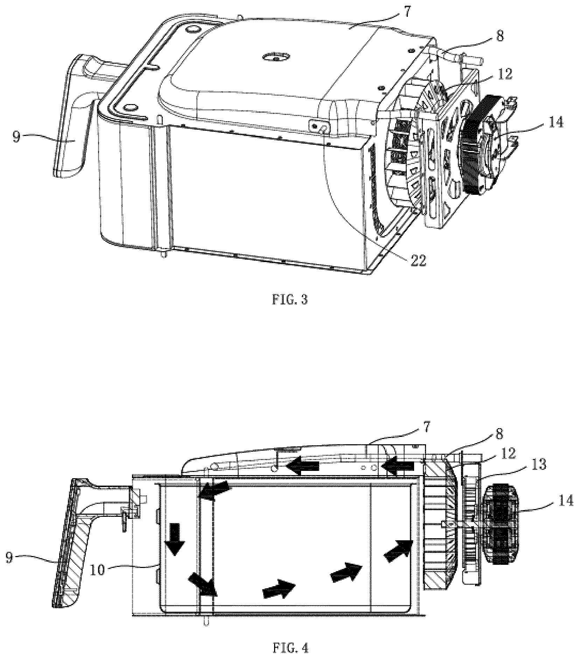

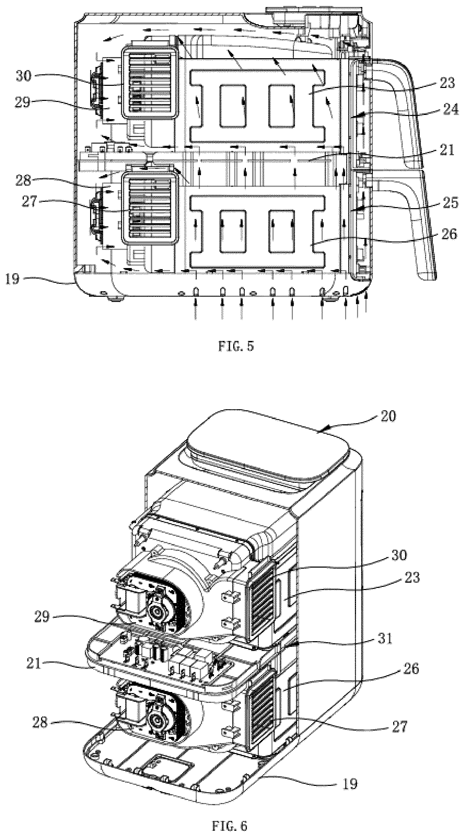

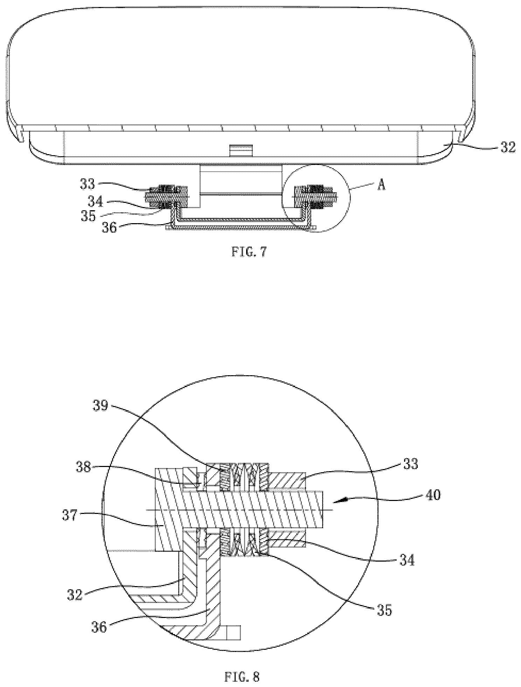

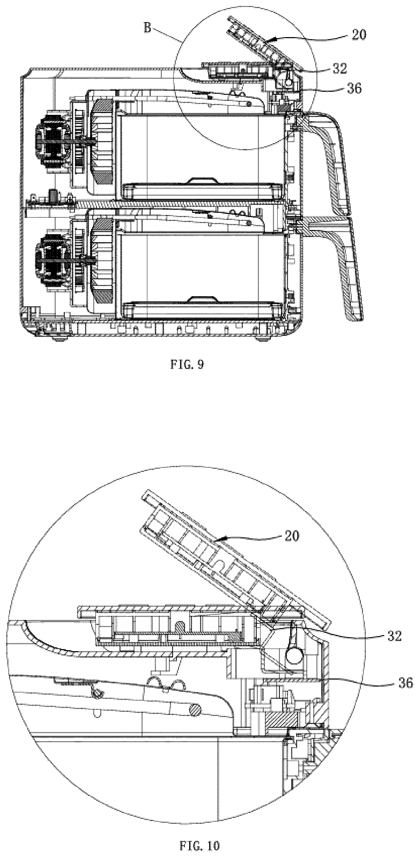

The configuration and functionality of the present invention are further described in conjunction with the accompanying illustrations. As depicted in FIGS. 1-10, the air fryer comprises a PCB control assembly 1, an upper metal thermal barrier 2, an upper heating tube 3, an upper handle 4, an upper basket body 5, an upper grill 6, a lower metal thermal barrier 7, a lower heating tube 8, a lower handle 9, a lower basket body 10, a lower grill 11, a lower metal centrifugal air blade 12, a lower plastic centrifugal air blade 13, a lower motor 14, a power board assembly 15, an upper motor 16, an upper metal centrifugal air blade 17, and an upper metal centrifugal air blade 18. The air fryer is structured into upper and lower sections, each containing corresponding chambers. The rear section of the air fryer is equipped with air blades, while the upper and lower chambers feature heating tubes at tops, along with openings on one side for placing baskets. Specifically, the height of the upper metal thermal barrier, located above the heating tube in both chambers, increases from the front opening side of the body to the back curved surface. Additionally, the upper metal thermal barrier at the opening side is designed with a cap edge above the basket openings in both chambers, and the thermal barrier adjacent to the air blade is integrated with the upper metal thermal barrier, forming a cohesive thermal barrier corresponding to the body's opening. The cap edge is positioned at the lower section of the basket body, adjacent to the basket opening, in alignment with the upper metal thermal barrier. A gap exists between the upper metal thermal barrier at the rear and the basket opening at the lower basket body, featuring a curved surface. Additionally, the upper section of the rear side of the lined metal thermal barrier is equipped with air outlet holes, while the lower section beneath these air outlet holes contains air inlet holes. These inlet holes are aligned with the honeycomb openings located on the front side of the basket body. The basket body is designed with both an air outlet and an air inlet. Furthermore, the inner wall of the basket body at the front end of the rear side is symmetrically equipped with evenly spaced raised guide bars. The said guide bars may be integrated through stamping with the inner basket or may be installed separately within the flow guide, which is affixed to the inner wall of the basket body.

The said air blades comprise both plastic and hardware centrifugal air blades, which are installed within the air guide cover located at the rear of the upper and lower chambers simultaneously. The motor shaft, positioned at the back of the air guide cover, connects to the plastic and metal centrifugal air blades in these chambers concurrently. The air guide cover associated with the plastic centrifugal air blades features perforated holes around its circumference, while the air guide cover for the metal centrifugal air blades is linked to the inner cavity of the plastic centrifugal air blades and the metal centrifugal air blades through openings at the rear. Additionally, the air guide for the metal centrifugal air blade is connected to the inner cavity of the air guide for the plastic centrifugal air blade. The air guide for the plastic centrifugal air blade is constructed from plastic, whereas the air guide for the metal centrifugal air blade is made from metal materials. At the rear of the upper chamber, a power board assembly and an external power supply line are installed, and a PCB control assembly is positioned at the upper corner of the body above the upper handle, extending out of the upper chamber. This PCB control assembly, along with the motor and heat pipe, is connected to the power board assembly via wiring. The exterior of the upper handle is aligned vertically or diagonally with the exterior of the lower handle below it. NTC temperature sensors22 are located on the rear side of the top metal thermal barrier at the heat pipe within both the upper and lower chambers, and these sensors are connected to the power board assembly within the body through wiring.

The cold air system of the air fryer comprises several components, including a body, an upper metal liner23, an upper frying basket liner24, a plastic partition21, a lower frying basket liner25, a lower metal liner26, a base 19, a lower air outlet27, a lower air guide cover28, an upper air guide cover29, an upper air outlet30, a control box20, an upper inner basket, and a lower inner basket. The base is positioned at the stand located at the bottom of the body. The outer diameter of the metal liners in both the upper and lower chambers, along with the inner diameter of the body and base, form the primary cold air cavity. The said cavity is further divided into upper and lower sections by the plastic partition. The upper and lower subsidiary air cooling cavities are formed by the outer diameter of the basket liner and the inner diameter of the basket cover. These auxiliary cavities feature holes in the outer cover of the basket at both the upper and lower edges of the thru-hole, which connects to the base beneath the body opening and the edges of the holes. The opening above the metal liner of the body is situated within the stand. Additionally, the base is equipped with evenly spaced openings that serve as air inlets. The upper metal liner functions as the thermal barrier in the upper chamber, while the lower metal liner serves as the thermal barrier in the lower chamber.

The cold air generated by this system flows through the openings at the base. A portion of this air is directed upward through the holes in both the upper and lower frying basket liners, subsequently passing through the upper metal liner and the PCB assembly. This airflow is then drawn towards the rear and ultimately returns to the top of the upper air guide hood enclosure, where it is expelled upward through the air outlet and released from the body via the cold air channel formed by the upper plastic centrifugal blades and the upper air guide hood. Another portion of the air travels through the lower metal liner, with some of it moving upward through the gap in the middle plastic partition and the upper section of the upper metal liner, passing through the upper metal thermal barrier back to the upper air guide enclosure. It then flows through the upper metal centrifugal air blades and the upper air guide enclosure, forming a cold air channel that directs air upward to the outlet, discharging it outside the unit. Additionally, another portion of air from the lower metal liner returns to the lower air guide enclosure, where it is processed through the lower plastic centrifugal air blades and the lower air guide enclosure, forming a cold air channel that directs airflow downward. Finally, another portion from the lower section returns to the enclosure of the lower air guide cover via the lower plastic centrifugal air blade and the lower air guide cover, blowing downward to the lower air outlet and expelling air from the unit.

The said control box is positioned at the upper front section above the opening side of the body. The PCB control assembly is housed within this control box. The lower part of the control box is connected to the housing bracket 36 via the control box bracket 32. This hinge point incorporates a suspension hinge 40, which comprises a nut 33, a screw 37, and several anti-slip spacers: the first anti-slip spacer A34, the second anti-slip spacer B35, the third anti-slip spacer C38, and the second anti-slip spacer A39. The said screws are symmetrically arranged on the lugs located at both ends of the hinge joint between the control box bracket and the housing bracket. The screws are affixed to the nut via the control box bracket and the housing bracket at the specified joint. At one end of the connection between the control box bracket and the housing bracket, the screws are equipped with anti-slip spacer C. Conversely, at the opposite end of this connection, the screws linking the control box bracket to the housing bracket and the nut are fitted with a first anti-slip spacer A, an anti-slip spacer B, and a second anti-slip spacer A. Furthermore, each of the first and second anti-slip spacers incorporates at least two or more of the anti-slip spacer B. This configuration allows the control box to be positioned at any angle between 0 and 30 degrees through the use of a suspension hinge.

The said suspension structure for the control box comprises two symmetrical nut fastening systems. One end includes a nut, a screw, an anti-slip spacer A, four anti-slip spacers B, an anti-slip spacer C, along with a shared housing bracket and control box bracket. The center plane of the housing bracket is affixed to the top of the body, while the opposite end of the housing bracket is aligned with the smooth surface of the screw. Furthermore, the control box bracket is designed to secure the control box, which contains PCB control components. The other end is positioned flat against the screw, allowing for rotation of the screw and nut to achieve free suspension between 0 and 60 degrees.

To use the air fryer, user needs to detach the lower basket body via the lower handle or the upper basket body through the upper handle. Once food is placed in the lower grill of the lower basket body, it is reinserted into the main unit using the lower handle. Similarly, after food is added to the upper grill of the upper basket body, it is returned to the main unit through the upper handle. To start cooking, user simply presses the cooking button on the control panel, which enables automatic processing and cooking of the food in either the lower or upper basket body. Additionally, the control box can be opened and adjusted as needed for convenience.

## Claims

1. A dual-basket air fryer designed with top and bottom back-blowing features a dual-layer structure, comprising an upper and a lower chamber, a rear section of the appliance being equipped with air blades (13, 17), while the upper and the lower chamber are fitted with heating tubes (3,8), each chamber including a basket opening for placing a basket (5, 10) on one side, a thermal barrier (2, 7) being provided at the top of the lower and upper chamber respectively, running from the basket opening to a rear section in the form of a curved surface, the thermal barrier (2, 7) above the basket openings in both chambers being provided with a cap edge extending over the basket openings, a thermal barrier surrounding the air blades being integrated with the top thermal barrier, forming a cohesive thermal barrier corresponding to the openings on one side of the appliance, the cap edge at the lower basket opening is positioned away from the top thermal barrier (2), resulting in a curved gap between the back of the top thermal barrier and the lower basket opening, the upper section of the lined metal thermal barrier located at the rear of the specified gap is equipped with air outlet openings, while the lower section of the lined metal thermal barrier at the back of the same gap features air inlet openings, the air inlet holes align with honeycomb openings at the front end of the back of the basket body (5, 10), which is equipped with air inlet and outlet holes.

2. An air fryer with top and bottom back-blowing according to Claim 1, wherein the basket body (5, 10) features a front end that exhibits symmetrical distribution on the opposite side of the inner wall, **characterized by** evenly spaced raised guide bars, the guide bars being either formed through integrated stamping with the basket body (5, 10) or being positioned within a guide bar that is affixed to the inner wall of the basket body (5, 10).

3. An air fryer with top and bottom back-blowing according to Claim 1 or 2, wherein the said blades consist of plastic centrifugal wind blades (13) and metal centrifugal wind blades (12, 17), said blades being simultaneously positioned within the airflow guide cover located at the rear of the upper and lower chambers, wherein motor shafts situated at the back of the airflow guide cover are connected to the plastic (13) and metal centrifugal wind blades (12, 17) in the respective upper and lower chambers and the peripheral surfaces of the airflow guide cover associated with the plastic centrifugal wind blade (13) featuring perforated holes, while the wind cover linked to the metal centrifugal wind blade is connected to the inner chamber of the plastic centrifugal wind blade via back thru-holes, the airflow guide of the metal centrifugal blade being linked to the inner chamber of the airflow guide of the plastic centrifugal blade through a back thru-hole.

4. An air fryer with top and bottom back-blowing according to Claim 3, wherein the airflow guide cover associated with the plastic centrifugal blade (13) is constructed from plastic, while the airflow guide cover for the metal centrifugal blade (12, 17) is made from metal materials.

5. An air fryer with top and bottom back-blowing according to any of the preceding Claims, the upper and lower chambers being separated by a partition located in the rear section of the upper chamber, which houses a power board assembly (15) and an external power cord, the power board assembly (15) being positioned above the top corner of the body, along with PCB control components (1), motors (14, 16), and heat pipes, all of which are connected to the power board assembly (15) via wiring.

6. An air fryer with top and bottom back-blowing according to Claim 5, wherein the outer edge of the upper handle (4) is aligned vertically or diagonally with the outer edge of the lower handle (9) situated below it.

7. An air fryer with top and bottom back-blowing according to any of the preceding Claims, wherein the upper and lower chambers are equipped with NTC temperature sensors (22) located on the reverse side of the top layer of thermal barrier at the heating tube, the NTC temperature sensors (22) being connected to the power board assembly (15) within the body via respective wiring.

8. An air fryer with top and bottom back-blowing according to any of the preceding Claims, wherein the cold air system of the air fryer comprises a body, a plastic partition (21), a base (19), a metal liner (23, 26), and a frying basket liner (24, 25), the metal liner (23, 26) serving as the thermal barrier, while the base (19) is positioned within the stand of the bottom of the body, the outer diameters of the metal liner (23, 26) in the upper and lower chambers forming a primary cold air cavity between the inner diameters of the metal liner (23, 26) and the body, as well as the base (19), the primary cold air cavity being further divided into upper and lower main cold air chambers by the plastic partition (21), the outer diameters of the frying basket liner (24, 25) in both chambers being connected a the power board assembly (15) within the body through wiring, the spaces between the outer diameter of the basket liner (24, 25) and the inner diameter of the basket cover forming the upper and lower subsidiary air cooling cavities, the upper and lower edges of the basket cover featuring thru-holes that connect to the base (19) of the body below the openings, while the openings in the body are situated above the metal liner at the upper edge of the holes, air outlets being positioned on the body at the top and bottom of the plastic divider, and notches (32) being present on both sides of the edges of the plastic divider openings on the body.

9. An air fryer with top and bottom back-blowing according to Claim 8, wherein the base (19) is designed with evenly spaced openings located at the bottom or on both sides, which serve as air inlets.

10. An air fryer with top and bottom back-blowing according to Claim 8, wherein there exists a recessed groove at the top front end of the said body and above the opening side, and a beveled edge is incorporated into the metal liner of the body beneath this groove, a control box (20) being situated within the groove.

11. An air fryer with top and bottom back-blowing according to any of the preceding Claims, wherein the control box (20) is positioned at the upper front end, situated above the opening side of the body, the control box (20) containing PCB control components and being connected to a housing bracket (36) via a hinged mechanism, specifically through a control box bracket (32), the hinge mechanism being equipped with a suspension hinge (40), the suspension hinge (40) comprising nuts (33), screws (37), and various anti-slip spacers, including a first anti-slip spacer (35) A, anti-slip spacer (36) B, anti-slip spacer (38) C, and a second anti-slip spacer (39) A, the screws (37) being symmetrically arranged on both the control box bracket (32) and the hinge connection of the housing bracket (36), the lugs at each end of the hinge joint between the control box bracket (32) and the housing bracket (36) facilitating the connection of the screws (37) to the nuts (33) through these brackets, anti-slip spacer (38) C being positioned between the control box bracket (32) and the housing bracket (36) at one end of the connection, along with the first anti-slip spacer 35, anti-slip spacer (36) B, and the second anti-slip spacer (39) A, preferable at least two or more anti-slip spacers (36) B being placed between the first and second anti-slip spacers (35, 39) A.

12. An air fryer with top and bottom back-blowing according to Claim 11, wherein the said control box (20) is freely suspended within a range of 0 to 60 degrees via the suspension hinge.
